# FASCICULE DE BREVET EUROPEEN

(11) **EP 0 345 612 B1**
(45) Date de publication et mention de la délivrance du brevet: **10.02.1993**
(21) Numéro de dépôt: 89109768.5
(22) Date de dépôt: 30.05.1989
(51) Int. Cl.: B60B 21/10

(54) **Jante pour pneumatique à accrochage inverse**
Radfelge für Reifen mit umschlingender Einklammerung
Vehicle wheel rim for tyres with inwardly clamping beads

(30) Priorité: 09.06.1988 FR 8807831
(43) Date de publication de la demande: 13.12.1989
(73) Titulaire: COMPAGNIE GENERALE DES ETABLISSEMENTS MICHELIN-MICHELIN & CIE, F-63000 Clermont-Ferrand (FR)
(72) Inventeur: Durif, Pierre, F-63530 Volvic (FR)
(74) Mandataire: Bauvir, Jacques

(56) Documents cités:
- EP-A- 0 079 454
- EP-A- 0 156 009
- DE-A- 3 408 953
- FR-A- 333 125

## Description

La présente invention concerne les jantes pour ceux des pneumatiques qui prennent appui sur la jante radialement par l'intérieur.

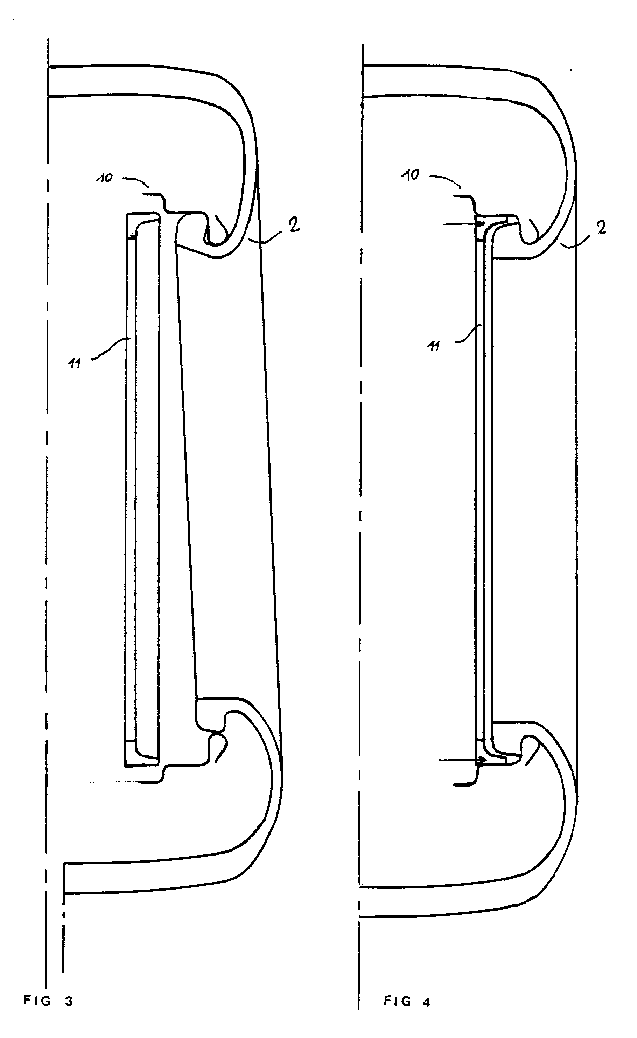

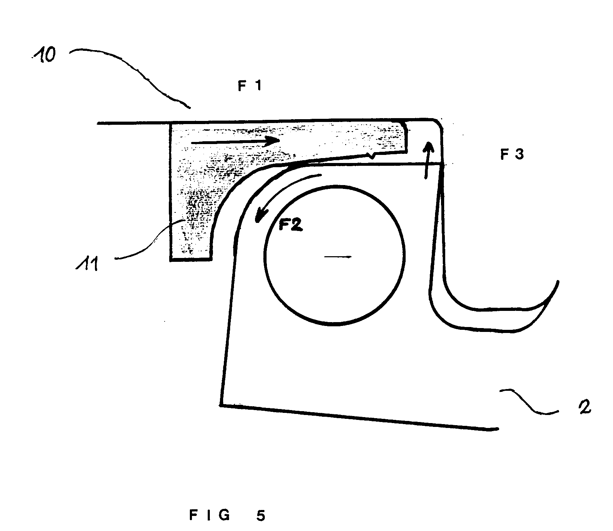

Le montage de tels pneumatiques -dits à accrochage inversésur leurs jantes est décrit dans le brevet US-A-4 516 617. Malencontreusement, on a constaté en pratique que la manipulation illustrée par la figure 4 de ce brevet ne peut quasi jamais se dérouler comme cela est expliqué. Il est proposé de faire pénétrer le bourrelet dans une zone située axialement à l'intérieur du siège de bourrelet pour servir de creux de montage. Par analogie avec la technique de montage des pneumatiques accrochés radialement à l'extérieur de la jante, le creux de montage doit être disposé de façon à ce que lorsqu'on y dispose un secteur du bourrelet, le secteur situé du côté diamétralement opposé puisse franchir le rebord de jante. Cependant, le pneumatique lui-même s'oppose à cette manipulation. Comme on peut le comprendre en consultant toujours cette même figure 4 du brevet US-A-4 516 617, pour pouvoir faire pénétrer le bourrelet dans le creux de montage, il est nécessaire d'exercer une tension très forte sur le flanc. En coupe, on voit bien que celui-ci se dispose en lignes tendues, alors que sa forme naturelle est très arrondie comme par exemple aux figures 3 ou 5 du même brevet US-A-4 516 617.

On ne peut pas favoriser cette manipulation en décentrant (par rapport à l'axe de rotation) la bande de roulement sur l'ensemble de circonférence du pneumatique car alors le franchissement du rebord de jante du côté diamétralement opposé est plus difficile ou impossible puisque c'est un décentrement dans l'autre sens qui le favoriserait. Au contraire, dans le cas d'un accrochage radialement par l'extérieur, décentrer la bande de roulement favorise à la fois la pénétration dans le creux de montage et le franchissement du rebord du côté diamétralement opposé. La transposition des techniques de montage n'est donc pas complète.

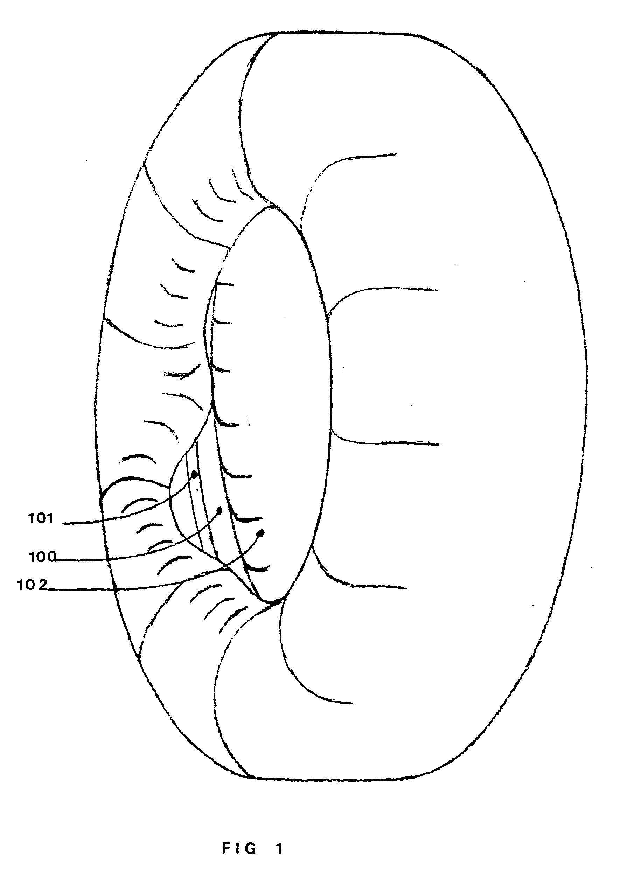

En pratique donc, au cours du montage, la partie du bourrelet déjà engagée à l'intérieur de la jante reste en contact axialement avec le rebord de jante, ce qui, à la fin du montage, provoque une déformation importante en flexion et en compression du bourrelet, comme illustré par la figure 1 de la présente description.

Ce montage pose des difficultés plus grandes encore lorsque la partie du flanc proche de la tringle comporte des renforcements qui en diminuent la souplesse. Il est alors difficile de faire pénétrer le bourrelet dans la partie approfondie recevant provisoirement le bourrelet au cours de son montage sur le siège, et plus difficile encore d'atteindre les déformations nécessaires pour parvenir au montage sans utiliser le creux de jante.

La présente invention a pour but de proposer une jante qui facilite le montage des pneumatiques à accrochage inversé, c'est-à-dire ceux des pneumatiques dont les bourrelets prennent appui radialement à l'intérieur de la jante.

La jante selon la présente invention, pour un pneumatique à accrochage inversé, ladite jante comportant une virole se terminant axialement de chaque côté par une zone située dans le prolongement radial des bourrelets lorsque ceux-ci sont montés sur la jante, ladite zone étant directement prolongée par un rebord de jante dirigé radialement vers l'intérieur, est caractérisée en ce que ladite jante comporte, de chaque côté, un siège de bourrelet mobile axialement par rapport à ladite zone, situé radialement à l'intérieur de celle-ci.

Les figures suivantes illustrent un mode de réalisation de l'invention et permettent d'en avoir une parfaite connaissance.

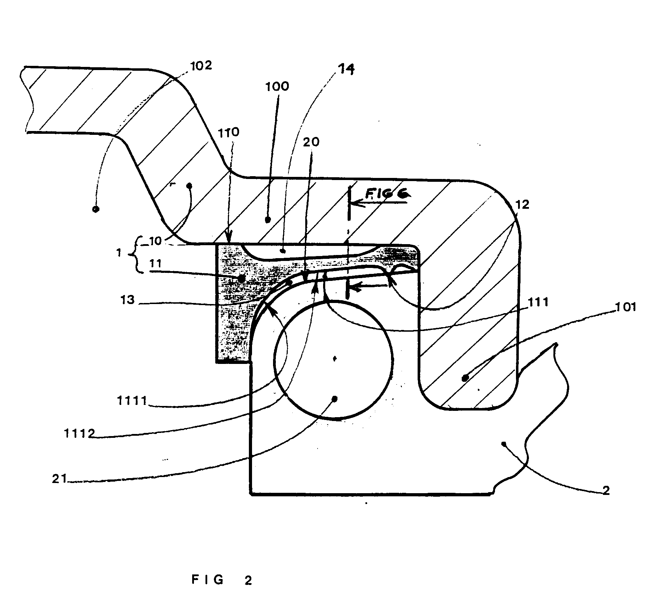

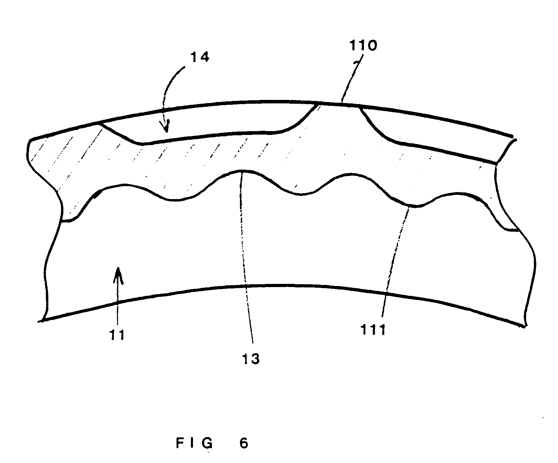

La figure 2 est une coupe méridienne partielle d'une jante sur laquelle le pneumatique est monté. Les figures 3, 4 et 5 illustrent le montage du bourrelet. la figure 6 est une coupe selon VI-VI à la figure 2. Pour rappel, la figure 1 illustre l'état de la technique.

A la figure 2, on voit une jante 1 sur laquelle est monté un bourrelet 2 d'un pneumatique à accrochage inversé. La jante 1 comporte un pneumatique à accrochage inversé. La jante 1 comporte une virole 10 et un siège 11 de chaque côté de celle-ci. L'invention concernant la conception du postionnement de 1 appui du bourrelet sur sa jante, les figures 2, 3, 4 et 5 ne montrent qu'un seul côté axial de la jante. Il va de soi que cela suffit à la pleine compréhension de l'invention. Dans le prolongement radial du bourrelet 2, une zone 100 de la virole 10 est disposée sensiblement parallèlement à l'axe de rotation, (Il s'agirait du siège de jante pour une jante telle que connue dans l'état de la technique) ladite zone 100 étant prolongée par un rebord 101 de jante assurant le positionnement précis dans le sens axial du bourrelet 2, par un effet de butée mécanique. Dans le sens radial, le bourrelet 2 trouve son appui radialement par l'intérieur sur un siège 11 conçu comme une pièce séparée de la virole 10. La virole 10 par rapport au bourrelet 2, ou le bourrelet 2 par rapport à la virole 10 est conçu de façon à laisser un jeu radial entre la zone 100 de la virole 10 et la face 20 du bourrelet 2. C'est ce jeu qui facilite le montage comme cela apparaît à la consultation des figures 3 et 4. Pour centrer de façon précise le pneumatique par rapport à la jante 1, on insère entre la zone 100 de la virole 10 et le bourrelet 2 une pièce en forme d'anneau, constituant le siège 11 du bourrelet 2. Ce siège 11 de bourrelet est lui-même inséré dans la virole 10, à l'intérieur des rebords 101, en profitant de sa flexibilité et du creux de montage 102 présent sur la jante 1 et/au en concevant le siège 11 comme un anneau élastique fendu.

Au départ du montage du bourrelet 2, on positionne celui-ci en contact avec la zone 100, ce qui permet de franchir aisément le rebord 101 du côté diamétralement opposé (figure 3). Ensuite (figure 4), il suffit d'insérer le siège 11 entre le bourrelet 2 et la zone 100.

Le siège 11 représenté comporte quelques dispositions, non limitatives, qui améliorent encore la présente invention. Ainsi, la forme en coin du siège 11 (vu en section méridienne - figure 2) permet de rattraper le jeu tout en minimisant l'effort d'insersion du siège 11. La face radialement intérieure de la zone 100 est cylindrique, c'est-à-dire parallèle à l'axe de rotation et la face radialement intérieure 110 du siège 11 est également cylindrique, au même diamètre.

Bien souvent, de tels pneumatiques sont vulcanisés dans une position dans laquelle leurs bourrelets sont très écartés par rapport à la position de montage sur la jante (voir demande de brevet DE-A-32 46 624). La manipulation consistant à les amener dans une position voisine de la position de montage, telle que celle illustrée par la figure 3, provoque des contraintes internes qui ont tendance à faire tourner le bourrelet au delà de sa position finale (voir figure 5). Pour tenir compte des contraintes résultant de cette technique de fabrication, la face radialement intérieure du siège comporte successivement, en partant axialement de l'intérieur pour aller vers l'extérieur, une première partie 1111 dont la section méridienne est un arc de cercle, raccordé à une seconde partie 1112 tronconique inclinée vers l'extérieur. Ceci permet une légère rotation du bourrelet 2 autour de la tringle 21, facilitant le montage final (voir figure 5). Lors de l'insersion du siège 11 selon la flèche F₁, il faut donc que le bourrelet tourne comme indiqué par F₂. La partie en arc de cercle facilite ce mouvement.

Afin d'assurer un blocage en place de l'ensemble ainsi monté, on a prévu, à la surface radialement intérieure du siège 11, des aspérités 12 en relief, situées du côté axialement extérieur. Au cours de la rotation F₂ accompagnant l'insertion du siège 11, en fin de ce mouvement, le bourrelet pénètre dans ces aspérités, comme schématisé par la flèche F₃. Notons que au moins la fin de ce mouvement est obtenue par le gonflage du pneumatique.

Le démontage, après dégonflage est donc possible. Par la disposition explicitée, on atteint une excellente immobilité du siège 11 par rapport à la virole 10 et par rapport au bourrelet 12.

Afin d'améliorer la capacité du siège 11 de s'accommoder de tolérances dimensionnelles larges du bourrelet 2, sans qu'il en résulte un serrage soit trop important, soit insuffisant, on peut amoindrir la portée effective de la face 20 du bourrelet 2 sur la surface 111 du siège 11 en prévoyant des ondulations 13 sur le siège 11, dans le sens circonférentiel (figures 2 et 6).

Pour améliorer la tenue du siège 11 sur la virole 10, on peut aussi augmenter la pression de contact en prévoyant des évidements 14 sur la face radialement intérieure 110 du siège 11.

On peut bien sûr, sans sortir du cadre de la présente invention tel que défini dans les revendications suivantes, prévoir que le siège 11 soit réalisé en plusieurs pièces circonférentiellement. On peut également ajouter toute disposition de blocage, axialement vers l'intérieur, du siège 11 si cela s'avère nécessaire.

## Revendications

1. Jante (1) pour un pneumatique à accrochage inversé, ladite jante (1) comportant une virole (10) se terminant axialement de chaque côté, par une zone (100) directement prolongée par un rebord (101) de jante (1) dirigé radialement vers l'intérieur, caractérisée en ce que ladite jante comporte, de chaque côté, un siège (11) de bourrelet (2) mobile axialement par rapport à ladite zone (100), située radialement à l'intérieur de celle-ci.

2. Jante selon la revendication 1, caractérisée en ce que la face radialement intérieure de ladite zone (100) est cylindrique, et en ce que la face radialement extérieure (110) dudit siège (11) est égalemnt cylindrique et au même diamètre, et la face radialement intérieure (111) dudit siège (11) comporte successivement, en partant axialement de l'intérieur pour aller vers l'extérieur, une première partie (1111) dont la section méridienne est un arc de cercle, raccordé à une seconde partie (1112) tronconique inclinée axialement vers l'extérieur.

3. Jante selon l'une des revendications 1 ou 2, caractérisée en ce que la face radialement intérieure (111) dudit siège (11) comporte des aspérités (12) en relief situées du côté axialement extérieur.

4. Jante selon l'une des revendications 1 à 3, caractérisée en ce que la face radialement intérieure (111) dudit siège (11) comporte les ondulations (13) dans le sens circonférentiel.

5. Jante selon l'une des revendications 1 à 4, caractérisée en ce que la face radialement extérieure (110) dudit siège (11) comporte des évidements (14).

## Claims

1. A wheel rim (1) for a reversed hooked tire comprising a collar (10) having axially on either ends, a zone (100) directly connected to the rim (1) edge (101) which protrudes radially inwardly, characterized by the fact that said rim comprises, on either side, a annular seat (11) removably positionable between said bead (2) and said zone (100).

2. A wheel rim according to claim 1, characterized by the fact that said zone (100) has a radially inside face and said seat (11) has a radially outside face (110), the radially inside face of said zone and the radially outside face of said seat both being cylindrical and having the same diameter, said seat having a radially inside face (111), said radially inside face of said seat comprising, in an axially outward direction, a first part (1111) whose meridian section is an arc, connected to a second (1112), tapered part inclined axially outward.

3. A wheel rim according to one of claims 1 or 2, characterized by the fact that the radially inside face (111) of said seat (11) comprises projecting rough spots (12) located on the axially outside side.

4. A wheel rim according to one of claims 1 to 3, characterized by the fact that the radially inside face (111) of said seat (11) comprises undulations (13) in the circumferential direction.

5. A wheel rim according to one of claims 1 to 4, characterized by the fact that the radially outside face (110) of said seat (11) comprises recesses (14).

## Patentansprüche

1. Felge (1) für das Felgenhorn außen umgreifende Luftreifen, die einen Übergangsteil (10) aufweist, der auf beiden Seiten in axialer Richtung in einem Bereich (100) endet, der sich direkt in ein Felgenhorn (101) der Felge (1) fortsetzt, das radial nach innen ragt, dadurch gekennzeichnet, daß die Felge auf beiden Seiten einen Wulstsitz (11) für den Wulst (2) aufweist, der in Bezug auf den Bereich (100) in Axialrichtung beweglich ist und in Bezug auf diesen Bereich radial innenliegend angeordnet ist.

2. Felge nach Anspruch 1, dadurch gekennzeichnet, daß die radial innenliegende Seite des Bereichs (100) zylindrisch ist und die radial außenliegende Seite (110) des Wulstsitzes (11) ebenfalls zylindrisch ist und den gleichen Durchmesser aufweist und die radial innenliegende Seite (111) des Wulstsitzes (11), wenn in axialer Richtung von innen nach außen gegangen wird, nacheinander einen ersten Teil (1111), dessen Meridianquerschnitt ein Kreisbogen ist, sowie einen sich daran anschließenden zweiten Teil (1112) aufweist, der kegelstumpfförmig ausgebildet und in Axialrichtung nach außen geneigt ist.

3. Felge nach Anspruch 1 oder 2, dadurch gekennzeichnet, daß die radial innenliegende Seite (111) des Wulstsitzes (11) herausragende Unebenheiten (12) aufweist, die axial außenseitig angeordnet sind.

4. Felge nach einem der Ansprüche 1 bis 3, dadurch gekennzeichnet, daß die radial innenliegende Seite (111) des Wulstsitzes (11) in Umfangsrichtung Wellungen (13) aufweist.

5. Felge nach einem der Ansprüche 1 bis 4, dadurch gekennzeichnet, daß die radial außenliegende Seite (110) des Wulstsitzes (11) Ausnehmungen (14) aufweist.
